# EUROPEAN PATENT SPECIFICATION

(11) **EP 4 289 545 B1**
(45) Date of publication and mention of the grant of the patent: **08.10.2025**
(21) Application number: 22749410.1
(22) Date of filing: 11.01.2022
(51) Int. Cl.: B23K 26/00, B23K 26/382

(54) **LASER PROCESSING MACHINE**
LASERBEARBEITUNGSMASCHINE
MACHINE DE TRAITEMENT AU LASER

(30) Priority: 03.02.2021 JP 2021015482
(43) Date of publication of application: 13.12.2023
(73) Proprietor: Amada Co., Ltd., Isehara-shi, Kanagawa 259-1196 (JP)
(72) Inventor: SUGIYAMA, Akihiko, Isehara-shi, Kanagawa 259-1196 (JP); WAKUI, Hirotada, Isehara-shi, Kanagawa 259-1196 (JP); ISHIGURO, Hiroaki, Isehara-shi, Kanagawa 259-1196 (JP); MIYOSHI, Shuji, Isehara-shi, Kanagawa 259-1196 (JP); WAKE, Koichi, Isehara-shi, Kanagawa 259-1196 (JP)
(74) Representative: Grünecker Patent- und Rechtsanwälte PartG mbB
(86) International application number: PCT/JP2022/000480
(87) International publication number: WO 2022/168531

(56) References cited:
- DE-A1- 102017 107 499
- JP-A- 2017 131 937
- JP-A- 2017 177 174
- JP-A- 2017 205 775
- JP-A- 2020 175 425
- JP-A- 2021 007 957
- US-A1- 2013 218 321
- US-B2- 10 532 432

## Description

The present invention relates to a laser processing machine, see claim 1.

### Background Art

When processing a workpiece, a laser processing machine calls up a processing condition set in advance for each material quality, thickness, and processing method of the workpiece so as to start laser processing. Even if materials are of the same type, the materials have individual differences from manufacturer to manufacturer. Further, even if materials are from the same manufacturer, the materials have individual differences from lot to lot. Therefore, even if materials are of the same type, there is a case in which normal processing cannot be carried out under the processing condition set in advance in the laser processing machine.

Therefore, there has been known a laser processing machine that monitors a processing state of laser processing by detecting, with a spectrometer provided to a laser processing head, a beam level in a specific wavelength band of a return beam generated during the laser processing and comparing the detected level with a threshold set in advance (see Patent Literature 1). Further, there has been known a method of monitoring a processing state of laser cutting by detecting a processing beam generated from a workpiece in the laser processing in a first wavelength range (Δλ1) having a bright line and in a second wavelength range (Δλ2) having no bright line, respectively (see Patent Literature 2).

### Citation List

### Patent Literature

Patent Literature 1: Japanese Patent No. 6725572
Patent Literature 2: European Patent No. 3455028

US 2013/218321 A1 (describing the preamble of claim 1) relates to laser machining control. In particular, test machining is performed before product machining is started. In the test machining, it is determined whether a machining object corresponds to a machining condition or not in laser machining on the basis of a reflected light intensity of a reflected light, which is reflected coaxially with the laser light. In particular, the material and the thickness of the machining object are determined by determining whether the reflected light intensity is within a specified intensity range, and whether the piercing time (i.e. a time span before a drop in the reflected intensity due to piercing) is within a specified time range.

### Summary

### Technical Problem

However, the above-mentioned laser processing machine monitors the processing state by the laser processing of the workpiece during product processing, and thus cannot determine a processing possibility (workability) of the workpiece prior to the product processing. In other words, in order to know the processing. The beam detection unit is capable of detecting a light intensity distribution of the beam in a predetermined wavelength band. The processing determination unit is configured to determine a processing possibility of the workpiece based on the light intensity distribution detected by the beam detection unit during the preliminary processing.

According to a first aspect of the present invention, a laser processing device is defined in claim 1. Thus, the control unit carries out the preliminary processing of the workpiece in the preliminary processing mode prior to the product processing, and the processing determination unit determines the processing possibility of the workpiece based on the light intensity distribution detected by the beam detection unit during the preliminary processing. Therefore, it is possible to know the processing possibility of the workpiece prior to the product processing.

Further preferred embodiments of the first aspect of the present invention are defined in the appended claims.

### Advantageous Effect of Invention

According to the laser processing machine according to the first aspect of the present invention, it is possible to know the processing possibility of the workpiece by the laser processing prior to the product processing.

### Brief Description of Drawings

[Figure 1] Figure 1 is an explanatory diagram showing a basic configuration of a laser processing machine according to an embodiment of the present invention.
[Figure 2] Figure 2 is an explanatory diagram showing a schematic configuration of the laser processing machine of the present embodiment.
[Figure 3] Figure 3 is a block diagram schematically showing a functional configuration of the laser processing machine of the present embodiment.
[Figure 4] Figure 4 is a diagram for illustrating preliminary processing of the present embodiment.
[Figure 5] Figure 5 is a diagram for explaining data detected by a beam detection unit during marking.
[Figure 6] Figure 6 is a diagram for explaining data detected by the beam detection unit during piercing.
[Figure 7] Figure 7 is a diagram showing a confusion matrix for explaining a determination result by a processing determination unit 60 during the marking.
[Figure 8] Figure 8 is a diagram showing a confusion matrix for explaining a determination result by the processing determination unit 60 during the piercing.
[Figure 9] Figure 9 is a flow chart showing an example of a laser processing method using the laser processing machine according to the present embodiment.

### Description of Embodiment

Hereinafter, the best embodiment for carrying out the present invention will be described by use of the drawings. Note that the following embodiment does not limit the invention related to the respective claims, and not all combinations of features described in the embodiment are essential for the solution of the invention.

### [Overall configuration of laser processing machine according to the present embodiment]

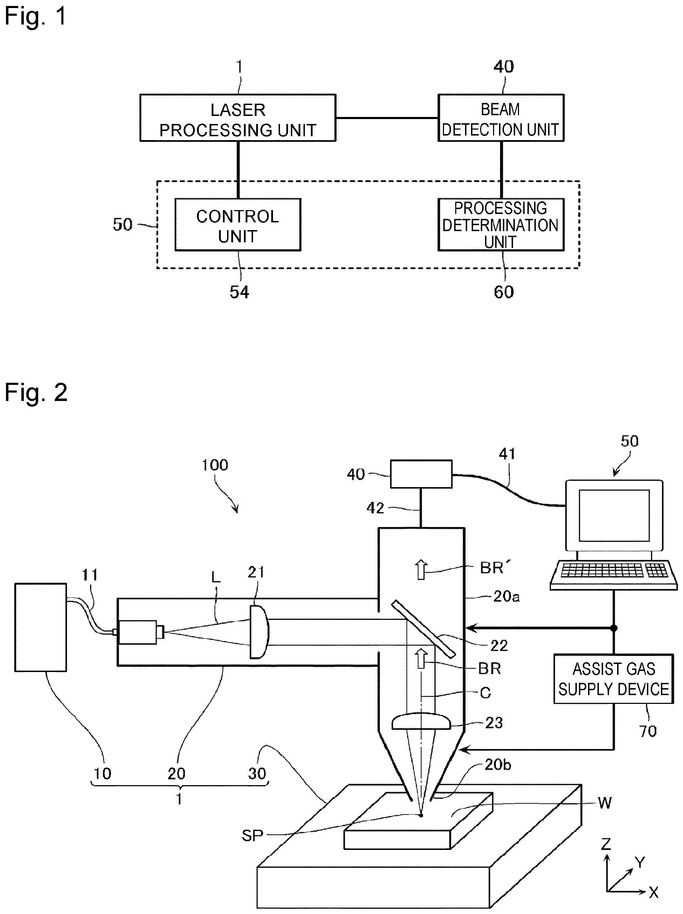

Figure 1 is an explanatory diagram showing a basic configuration of a laser processing machine according to an embodiment of the present invention. Figure 2 is an explanatory diagram showing a schematic configuration of the laser processing machine of the present embodiment.

As shown in Figures 1 and 2, a laser processing machine 100 according to the present embodiment basically includes a laser processing unit 1 configured to irradiate a workpiece W with a laser beam L to carry out laser processing on the workpiece W, a control unit 54 configured to control the laser processing unit 1 in accordance with a processing condition under which the workpiece W is processed, a beam detection unit 40 configured to detect a luminous phenomenon of a beam BR' from a processing portion SP of the workpiece W irradiated with the laser beam L, and a processing determination unit 60 connected to the beam detection unit 40. The control unit 54 controls the laser processing unit 1 in a product processing mode for carrying out product processing of the workpiece W, and in a preliminary processing mode for carrying out preliminary processing of the workpiece W prior to the product processing. The beam detection unit 40 is capable of detecting a light intensity distribution of the beam BR' in a predetermined wavelength band. The processing determination unit 60 determines a processing possibility (workability) of the workpiece W based on the light intensity distribution detected by the beam detection unit 40 during the preliminary processing.

As shown in Figure 2, the laser processing machine 100 specifically includes the laser processing unit 1, the beam detection unit 40, and an NC (numerical control) device 50. The laser processing unit 1 includes a laser oscillator 10, a laser processing head 20, a processing table 30, an assist gas supply device 70, and a drive mechanism (not shown). The drive mechanism (not shown) drives at least one of the laser processing head 20 and the processing table 30.

The laser oscillator 10 generates the laser beam L under control of the NC device 50, and supplies the laser beam L to the laser processing head 20 via a process fiber 11. The laser oscillator 10 that is preferably used includes, for example, a type of the laser oscillator in which a seed beam emitted from a laser diode excites and amplifies Yb (ytterbium) or the like in a resonator to emit the laser beam L of a predetermined wavelength, or a type of the laser oscillator in which the laser beam L emitted from the laser diode is directly used. The laser oscillator 10 includes, for example, a fiber laser oscillator, a YAG (yttrium aluminum garnet) laser oscillator, a disk laser oscillator, a DDL (direct diode laser) oscillator, and the like, as a solid laser oscillator.

The laser oscillator 10 emits, for example, the laser beam L in 1 µm band with a wavelength of 900 nm to 1100 nm. For example, the DDL oscillator emits the laser beam L with a wavelength of 910 nm to 950 nm, and the fiber laser oscillator emits the laser beam L with a wavelength of 1060 nm to 1080 nm. Further, a blue semiconductor laser emits a laser beam with a wavelength of 400 nm to 460 nm. A green laser may be the fiber laser oscillator or the DDL oscillator that emits a laser beam with a wavelength of 500 nm to 540 nm, or may be a multi-wavelength resonator in which a laser beam with a wavelength of 500 nm to 540 nm is optically synthesized with the laser beam L in 1 µm band.

The laser processing head 20 is controlled by the NC device 50 to irradiate the workpiece W on the processing table 30 with the laser beam L transmitted from the laser oscillator 10 via the process fiber 11. The laser processing head 20 includes a housing 20a in a cylindrical shape including an irradiation center axis C of the laser beam L. The laser processing head 20 includes, inside of the housing 20a, a collimator lens 21 into which the laser beam L emitted from an emission end of the process fiber 11 is made incident, and a beam splitter 22 for reflecting the laser beam L emitted from the collimator lens 21 downward in a direction of a Z-axis perpendicular to an X-axis and a Y-axis.

The beam splitter 22 is, for example, coated to reflect only a part of the wavelengths (1080 nm and 650 nm) of the laser beam L. Note that since the beam splitter 22 can be designed by changing a transmittance wavelength characteristic in accordance with the wavelength band of the arbitrary laser beam L to be used for the laser processing, the beam splitter 22 may be coated so as to reflect only the laser beam used for the processing. Further, the laser processing head 20 includes a processing condensing lens 23 that condenses the laser beam L reflected by the beam splitter 22.

The housing 20a is formed to have a tapered shape on a tip end side of the laser processing head 20. A nozzle 20b having an opening portion in a circular shape for irradiating the workpiece W with the laser beam L is provided at a tip end portion of the laser processing head 20. The nozzle 20b has a nozzle function for directing a gas flow supplied from the assist gas supply device 70 to the workpiece W coaxially with the laser beam L in order to remove the molten workpiece W, and is provided so as to be freely installed and detached.

The workpiece W such as a sheet metal can be placed on a surface of the processing table 30 facing the laser processing head 20. On the processing table 30, the workpiece W is subjected to, for example, cutting, marking, and piercing with the laser beam L emitted from the laser processing head 20.

The beam detection unit 40 includes a spectral function of the input beam and a detection function of the light intensity distribution. As the beam detection unit 40, a spectrometer is preferably used, for example. The beam detection unit 40 is connected to the housing 20a of the laser processing head 20 via an optical fiber 42. Specifically, one end portion of the optical fiber 42 is attached on the irradiation center axis C of the laser beam L, which is an end portion of the beam splitter 22 of the housing 20a on a transmission side through which a beam from the workpiece W is transmitted, so as to face the workpiece W, and the beam detection unit 40 is attached to an other end portion of the optical fiber 42.

The beam detection unit 40 inputs the beam BR' on the transmission side that has passed through the beam splitter 22, out of the beam BR that travels, accompanied by the laser irradiation, from a side of the processing portion SP of the workpiece W to a side of the beam splitter 22, as a luminance phenomenon of the processing portion SP. The beam detection unit 40 spectrally separates the input beam BR' and detects the light intensity distribution in the predetermined wavelength band. In the present embodiment, the predetermined wavelength band preferably ranges from a near-ultraviolet wavelength band to a near-infrared wavelength band, specifically, in a wavelength band from 300 nm to 1000 nm.

Here, the processing portion SP includes not only a processing point (not shown) of the workpiece W irradiated with the laser beam L, but also a cutting front, which is a slanting portion receiving the laser beam L in a processing direction in a cut slit, as well as a region in a vicinity thereof. In other words, the beam BR from the processing portion SP and the beam BR' input to the beam detection unit 40 include a beam emitted from the processing portion SP. The beam emitted from the processing portion SP includes a beam of high-temperature luminescence due to heat radiation of the workpiece W heated by the laser beam L, and a beam of plasma emission due to laser-induced plasma. Other than that, the beam BR from the processing portion SP and the beam BR' input to the beam detection unit 40 include a reflected beam, a scattered beam, and the like of the laser beam L.

The beam detection unit 40 is capable of detecting the light intensity distribution of the beam BR' in a time series manner. Time-series data of the light intensity distribution in the predetermined wavelength band, which is input to the beam detection unit 40, is input to the NC device 50 via a cable 41.

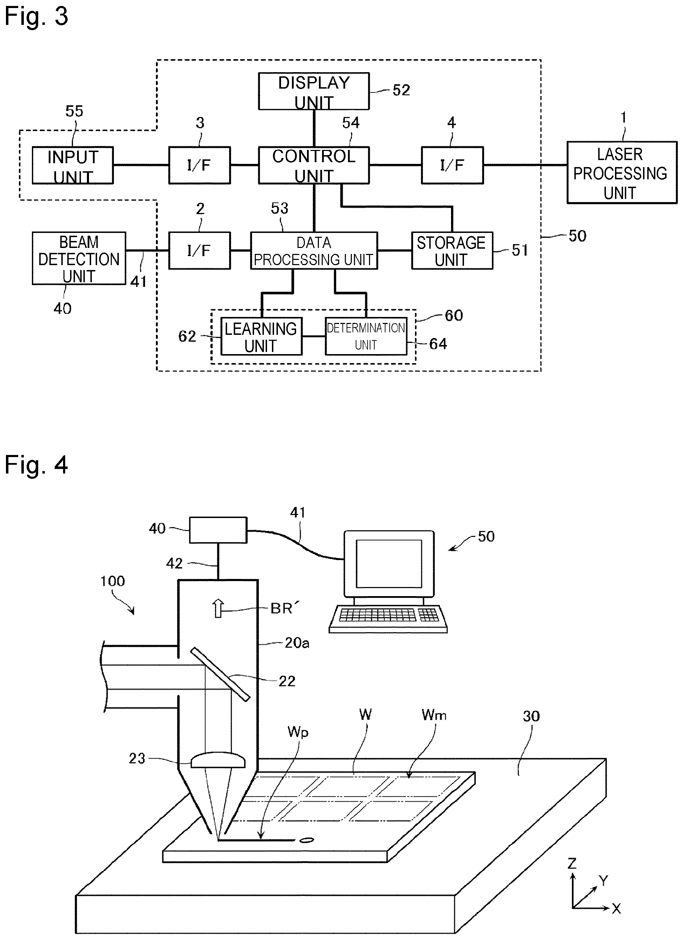

Figure 3 is a block diagram schematically showing a functional configuration of the laser processing machine of the present embodiment.

The NC device 50 functionally includes a storage unit 51, a display unit 52, a data processing unit 53, the control unit 54, an input unit 55, and the processing determination unit 60 as the ones responsible for processing monitoring, in addition to axis control and oscillator control for executing the laser processing. The processing determination unit 60 includes a learning unit 62 capable of learning a relation between the light intensity distribution detected by the beam detection unit 40 and the processing possibility of the workpiece W, and a determination unit 64 that determines the processing possibility of the workpiece W. Schematically, the processing determination unit 60 determines the processing possibility of the workpiece W based on the time-series data of the light intensity distribution of the beam BR' detected by the beam detection unit 40.

The storage unit 51 not only includes storage media such as a RAM (random access memory), a ROM (read only memory), an HDD (hard disk drive), an SSD (solid state drive), and the like, but also stores various pieces of data in a readable and writable manner. The display unit 52 displays a setting input screen for inputting various types of information including the processing condition for the laser processing, and a various types of screens of determination results and the like of the processing determination unit 60. The input unit 55 is composed of input devices such as a keyboard and a mouse, for example. Further, the data processing unit 53, the control unit 54, and the processing determination unit 60 are configured with an integrated arithmetic processing device that includes, for example, a CPU (central processing unit) and a GPU (graphics processing unit).

The display unit 52 may be configured by a touch panel having a function of the input unit 55. When the display unit 52 is configured by the touch panel, a user can input, through an interface (I/F) 3 to the control unit 54 of the NC device 50, various types of information in addition to a material quality and a thickness of the workpiece W by operating the display unit 52, for example.

In the data processing unit 53, the time-series data of the light intensity distribution of the beam BR', which is input from the beam detection unit 40 via the cable 41 and an interface (I/F) 2, is processed into data suitable for the learning unit 62 of the processing determination unit 60 to learn and analyze.

The control unit 54 controls an operation of the laser processing unit 1 via an interface (I/F) 4. Specifically, in the product processing mode, the control unit 54 controls the product processing by the laser processing unit 1 in accordance with the processing condition for the product processing and a tool path for the product processing that are read from the storage unit 51, and in the preliminary processing mode, the control unit 54 controls the preliminary processing by the laser processing unit 1 in accordance with the processing condition for the preliminary processing and a tool path for the preliminary processing that are read from the storage unit 51.

Figure 4 is a diagram for illustrating the preliminary processing of the present embodiment.

In the present embodiment, the preliminary processing is trial processing carried out to check the workability of the workpiece W prior to the product processing. The preliminary processing in the present embodiment is, for example, the marking and the piercing. As shown in Figure 4, the workpiece W includes a portion (product portion) Wm to be used as a product and a portion (scrap portion) Wp not to be used as the product. The laser processing unit 1 carries out the product processing on the portion Wm of the workpiece W to be used as the product, and carries out the preliminary processing on the portion Wp of the workpiece W not to be used as the product.

The processing determination unit 60 is configured to input the time-series data of the light intensity distribution, which is detected by the beam detection unit 40, to the learning unit 62 so that the learning unit 62 analyzes the data and the determination unit 64 determines the processing possibility of the workpiece W and presents an optimal processing condition (optimal condition) for the product processing. The learning unit 62 of the processing determination unit 60 analyzes the time-series data of the light intensity distribution detected by the beam detection unit 40 at the same time as the laser processing or after the laser processing is ended. In other words, the learning unit 62 has learned determination information corresponding to the various processing conditions for the product processing in advance, and the learning unit 62 owns the learned determination information corresponding to the processing condition for the product processing read from the storage unit 51. The determination unit 64 uses the learned determination information to determine the processing possibility.

In the present embodiment, the determination unit 64 of the processing determination unit 60 determines the processing possibility of the workpiece W in three stages of a case in which the processing is possible under the preset processing condition for the product processing (good), a case in which the processing is possible but processing of higher quality is possible by changing the processing condition (fair), and a case in which the processing is not possible (poor). Further, the case in which the processing is not possible (poor) includes a case in which the processing is possible but the quality is poor and a case in which the processing is impossible even if the processing condition is changed.

The determination unit 64 of the processing determination unit 60 determines the processing possibility of the workpiece W after the preliminary processing is ended and before the product processing is started. The determination result can be displayed on a display screen of the display unit 52. A preferable timing for displaying the determination result is, for example, after the preliminary processing is ended and before the product processing is started. Further, after the determination result of the processing possibility is displayed, the optimal condition is displayed on the screen of the display unit 52.

The processing determination unit 60 causes the learning unit 62 to learn in advance the relation between the light intensity distribution detected by the beam detection unit 40 and the processing possibility of the workpiece W. Specifically, first, the laser processing unit 1 carries out the marking and the piercing respectively N times under the same processing condition on M types of materials with the same thickness, and the time-series data of the light intensity distribution is detected by the beam detection unit 40. Each piece of the time-series data of the light intensity distribution is labeled with the processing possibility (good, fair, or poor) of the laser processing. The learning unit 62 is made to learn the labeled time-series data of the light intensity distribution as learning data so as to generate a learning model.

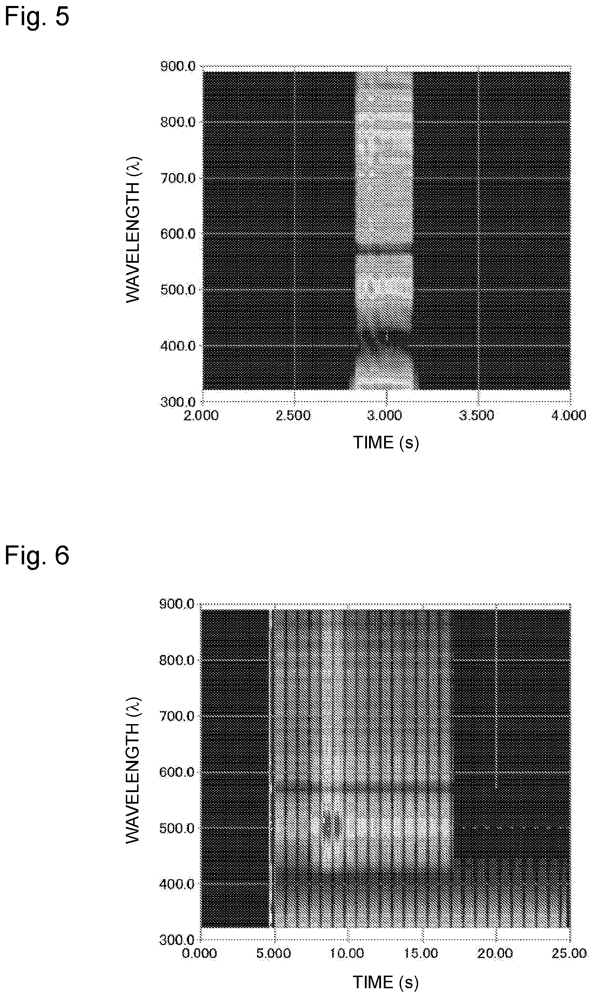

Figures 5 and 6 are diagrams for explaining data detected by the beam detection unit during the marking and the piercing, respectively.

As shown in Figures 5 and 6, the time-series data of the light intensity distribution detected by the beam detection unit 40 is each expressed as a heat map in which the vertical axis is the wavelength [nm], the horizontal axis is the time [s], and the color density is the light intensity [-].

Each element constituting the workpiece W has a unique emission spectrum. The emission spectrum of the workpiece W can be specified by being summed after weighting the emission spectrum by a mass ratio of the each element in the workpiece W. Therefore, the emission spectrum of the workpiece W reflects the mass ratio of the elements actually contained in the workpiece W. The marking mainly reflects a surface composition of the workpiece W. The piercing mainly reflects an internal composition of the workpiece W. By analyzing these surface composition and internal composition by the emission spectrum, it is possible to determine the workability of the workpiece W under a predetermined processing condition. The preliminary processing may be carried out with a minimum laser beam power with which an analyzable emission spectrum can be obtained. Therefore, the preliminary processing may be carried out with a power different from that used during the product processing. The determination can be made by machine learning.

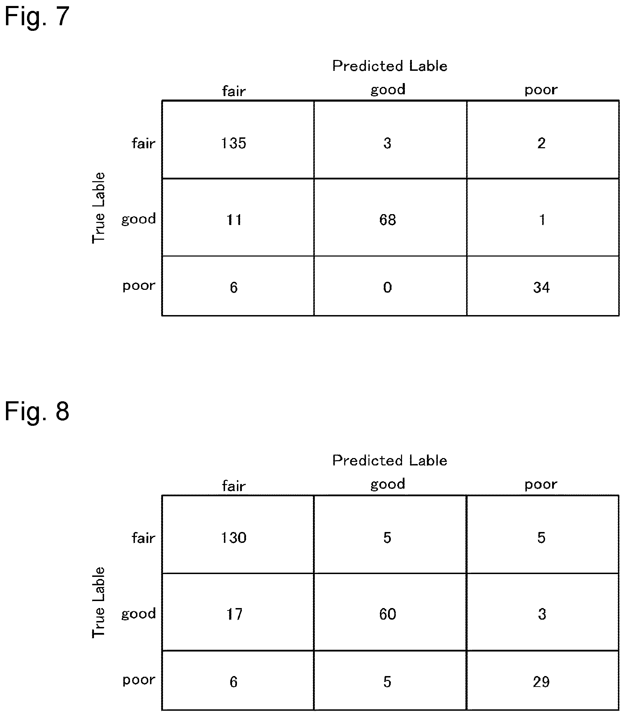

Figures 7 and 8 are diagrams showing confusion matrices for explaining the respective determination results of the marking and the piercing by the processing determination unit 60.

Here, the determination results of the processing possibility actually carried out by the processing determination unit 60 will be described. First, prior to the determination, the processing determination unit 60 carries out the preliminary processing 100 times for each of 13 types of soft steel materials, and causes the learning unit 62 to learn a total of 1300 pieces of learning data to generate a learning model. The processing possibility is determined 260 times by using the generated learning model.

As shown in Figure 7, in the marking, cases in which the actual processing possibility (True Label) is matched with the processing possibility (Predicted Label) determined by the processing determination unit 60 account for 91% of the total cases, which can be said a satisfactory correct answer rate. Further, as shown in Figure 8, in the piercing as well, cases in which the actual processing possibility is matched with the processing possibility determined by the processing determination unit 60 account for 84% of the total cases, which is also considered that a satisfactory determination ability is recognized.

In this manner, according to the laser processing machine 100 of the present embodiment, by determining the possibility of the laser processing of the workpiece W based on the time-series data of the light intensity distribution of the observed beam BR' during the preliminary processing, it is possible to know with a high determination accuracy whether or not the workpiece W can be used prior to the product processing.

### [Operation of laser processing machine according to the present embodiment]

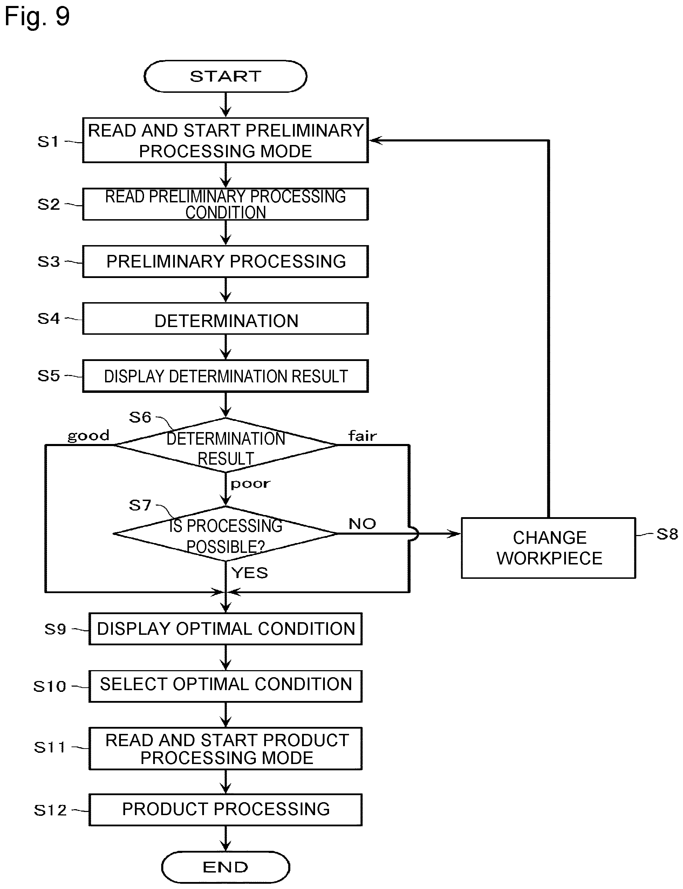

Figure 9 is a flow chart showing an example of a laser processing method using the laser processing machine according to the present embodiment.

A series of operations of the laser processing method using the laser processing machine 100 according to the present embodiment will be described with reference to Figure 9. As a precondition, the learning unit 62 of the processing determination unit 60 is made to learn in advance the relation between the time-series data of the light intensity distribution detected by the beam detection unit 40 and the processing possibility of the workpiece W.

Further, in the present flowchart, unless otherwise specified, what is described above can be applied to a subject of an operation in each step, a step relating to transmission and reception (exchange) of data in each unit of 51 to 54, 60, 62 and 64 including each of the I/Fs 2 to 4 in the NC device 50 shown in Figure 3, and the like. Therefore, the description thereof will be omitted.

First, the control unit 54 reads, from the storage unit 51, and starts the preliminary processing mode for carrying out the preliminary processing (S1). Next, the control unit 54 reads the processing condition for the preliminary processing and the tool path for the preliminary processing, which are stored (included) in the started preliminary processing mode (S2).

The control unit 54 controls the laser processing unit 1 in accordance with the processing condition for the preliminary processing and the tool path for the preliminary processing based on the respective pieces of information that are read, and the laser processing unit 1 irradiates the scrap portion Wp of the workpiece W with the laser beam L so as to start the preliminary processing (the marking or the piercing, or both) of the workpiece W (S3). At this time, the beam detection unit 40 spectrally separates the beam BR' on the transmission side that has passed through the beam splitter 22, out of the beam BR traveling from the processing portion SP, which is irradiated with the laser beam L, of the scrap portion Wp toward the side of the beam splitter 22, so as to detect the light intensity distribution in the time-series manner.

The data processing unit 53 receives the time-series data of the light intensity distribution of the beam BR' from the beam detection unit 40 via the cable 41 and the interface (I/F) 2, processes the time-series data of the light intensity distribution into the data suitable for the analysis by the learning unit 62 of the processing determination unit 60, and inputs the data to the learning unit 62. Note that the data to be analyzed by the learning unit 62 includes at least three-dimensional data of the wavelength, the light intensity, and the time.

The learning unit 62 of the processing determination unit 60 analyzes the time-series data of the light intensity distribution that is input from the data processing unit 53 at the same time as the preliminary processing or after the preliminary processing. Based on the analysis by the learning unit 62, the determination unit 64 of the processing determination unit 60 determines the processing possibility of the workpiece W by the preliminary processing in three stages of good, fair, and poor (S4), and the determination result is displayed on the display unit 52 (S5).

If the determination result of the processing determination unit 60 is good or fair (YES good or fair in S6), the determination unit 64 of the processing determination unit 60 obtains the optimal condition from the analysis result of the preliminary processing, and displays the optimal condition on the display unit 52 (S9). The control unit 54 selects the optimal condition presented by the determination unit 64 of the processing determination unit 60 (S10), reads the product processing mode for carrying out the product processing from the storage unit 51 so as to start the product processing mode (S11).

The control unit 54 controls the laser processing unit 1 in accordance with the processing condition for the product processing and the tool path for the product processing based on the selected optimal condition and each piece of information read from the storage unit 51. The laser processing unit 1 irradiates the product portion Wm of the workpiece W with the laser beam L to carry out the product processing of the workpiece W (S12), and the series of processing according to the present flowchart is ended.

If the determination result of the processing determination unit 60 is poor (in a case of being poor in S6), and if the quality is poor but the processing is possible (in a case of being YES in S7), the product processing is carried out in the same procedures as those in a case of being good or poor (S9 to S12). On the other hand, if the processing is impossible even if the processing condition is changed (in a case of being NO in S7), the process does not proceed to the product processing. The workpiece W is changed to an other workpiece W' (S8), and the control unit 54 again reads, from the storage unit 51, the preliminary processing mode for carrying out the preliminary processing so as to start the preliminary processing mode (S1). After the preliminary processing mode is started, the procedures of and after S2 are repeated.

### [Advantages of laser processing machine according to the present embodiment]

As described above, the laser processing machine 100 according to the present embodiment includes the laser processing unit 1 configured to irradiate the workpiece W with the laser beam L to carry out the laser processing on the workpiece W, the control unit 54 configured to control the laser processing unit 1 in accordance with the processing condition under which the workpiece W is processed, the beam detection unit 40 configured to detect the beam BR' from the processing portion SP of the workpiece W irradiated with the laser beam L, and the processing determination unit 60 connected to the beam detection unit 40. The control unit 54 controls the laser processing unit 1 in the product processing mode for carrying out the product processing of the workpiece W and in the preliminary processing mode for carrying out the preliminary processing of the workpiece W prior to the product processing. The beam detection unit 40 is capable of detecting the light intensity distribution of the beam BR' in the predetermined wavelength band. The processing determination unit 60 determines the processing possibility (the workability) of the workpiece W based on the light intensity distribution detected by the beam detection unit 40 during the preliminary processing.

Then, by having such a configuration, the laser processing machine 100 according to the present embodiment can know the processing possibility of the workpiece W by the laser processing prior to the product processing.

Further, in the laser processing machine 100 according to the present embodiment, the processing determination unit 60 determines the processing possibility of the workpiece W based on the time-series data of the light intensity distribution of the beam BR' detected by the beam detection unit 40. By having such a configuration, the laser processing machine 100 according to the present embodiment has an advantage of being able to determine the processing possibility of the workpiece W based on a temporal change in the light intensity distribution, such as stability of a molten state of the workpiece W within a predetermined time.

Furthermore, in the laser processing machine 100 according to the present embodiment, the processing determination unit 60 includes the learning unit 62 capable of learning the relation between the light intensity distribution detected by the beam detection unit 40 and the processing possibility of the workpiece W. With such a configuration, the laser processing machine 100 according to the present embodiment has an advantage of being able to cause the learning unit 62 of the processing determination unit 60 to machine-learn a pattern (feature) hidden in the relation between the light intensity distribution and the processing possibility, thereby making it possible to generate the learning model for determining the processing possibility from data of an unknown light intensity distribution. For example, even if the material is the same type of steel, a difference is generated in the composition of contained metal elements when a country, a manufacturer, a manufacturing plant, a lot, and/or the like are different. Therefore, this makes it possible for the learning unit 62 to learn the feature appropriate to a new processing condition tag that corresponds to the environmental change, so as to retrieve/adjust or create a processing condition corresponding to the unknown material. Note that the feature includes the result of the machine learning of a complex combination of the wavelength and the light intensity in which metal elements contained in these steel types, an element of the assist gas, and the like become luminous after being made into plasma by the laser beam L.

In addition, in the laser processing machine 100 according to the present embodiment, the processing determination unit 60 causes the learning unit 62 to learn in advance the relation between the light intensity distribution detected by the beam detection unit 40 and the processing possibility of the workpiece W. With such a configuration, the laser processing machine 100 according to the present embodiment has an advantage of being able to learn the feature from the learning data and determine the processing possibility of the workpiece W from the unknown light intensity distribution detected by the beam detection unit 40 based on the learned feature.

Furthermore, in the laser processing machine 100 according to the present embodiment, the processing determination unit 60 inputs the light intensity distribution detected by the beam detection unit 40 to the learning unit 62 so as to determine the processing possibility of the workpiece W. With such a configuration, the laser processing machine 100 according to the present embodiment has an advantage of being able to determine the processing possibility without using a complicated arithmetic expression.

In addition, the laser processing machine 100 according to the present embodiment has an advantage of being able to determine whether or not it is possible to cut the workpiece W in a desired quality by way of the irradiation with the laser beam L from the marking because the preliminary processing is the marking. Furthermore, the laser processing machine 100 according to the present embodiment has an advantage of being able to determine whether or not it is possible to maintain a cutting state of the workpiece W in a desired quality by way of the irradiation with the laser beam L from the piercing because the preliminary processing is the piercing.

In addition, in the laser processing machine 100 according to the present embodiment, the laser processing unit 1 carries out the preliminary processing on the portion (the scrap portion) Wp not to be used as the product of the workpiece W. With such a configuration, the laser processing machine 100 according to the present embodiment has an advantage of being able to reduce a wasteful consumption of the workpiece W, and effectively utilize the scrap portion Wp which is otherwise discarded as a scrap.

In addition, in the laser processing machine 100 according to the present embodiment, during the preliminary processing, the laser processing unit 1 irradiates the workpiece W with the laser beam L having a power lower than that used during the product processing. By having such a configuration, the laser processing machine 100 according to the present embodiment can reduce wear and damage of the laser processing unit 1 that are caused by the preliminary processing, and can also reduce power consumption of the laser processing machine 100.

### [Modifications]

Although the preferred embodiment of the present invention has been described above, the technical scope of the present invention is not limited to the scope described in the embodiment described above. Various modifications or improvements can be added to the embodiment described above.

For example, in the embodiment described above, the processing determination unit 60 is described as the one that determines the processing possibility of the workpiece W based on the time-series data of the light intensity distribution of the beam BR' detected by the beam detection unit 40. However, the processing determination unit 60 is not limited to this, and the processing determination unit 60 may be the one that determines the processing possibility of the workpiece W based on the light intensity distribution of the beam BR' at an arbitrary point in time.

In the embodiment described above, the processing determination unit 60 is described as the one that includes the learning unit 62 capable of learning the relation between the light intensity distribution detected by the beam detection unit 40 and the processing possibility of the workpiece W. However, the processing determination unit 60 is not limited to this, and the processing determination unit 60 may be the one that does not include the learning unit 62.

In the embodiment described above, the processing determination unit 60 is described as the one that causes the learning unit 62 to learn in advance the relation between the light intensity distribution detected by the beam detection unit 40 and the processing possibility of the workpiece W. However, the processing determination unit 60 is not limited to this. For example, the processing determination unit 60 may cause the learning unit 62 to perform so-called unsupervised learning without causing the learning unit 62 to learn in advance the relation between the light intensity distribution detected by the beam detection unit 40 and the processing possibility of the workpiece W.

In the embodiment described above, the processing determination unit 60 is described as the one that inputs, to the learning unit 62, the time-series data of the light intensity distribution detected by the beam detection unit 40 so as to determine the processing possibility of the workpiece W. However, the processing determination unit 60 is not limited to this. The processing determination unit 60 may be the one that does not input, to the learning unit 62, the time-series data of the light intensity distribution detected by the beam detection unit 40.

In the embodiment described above, the preliminary processing is described as being the marking and/or the piercing, but the preliminary processing is not limited to this. For example, the preliminary processing may be the cutting and/or the like.

In the embodiment described above, the laser processing unit 1 is described as the one that carries out the preliminarily processing on the portion (the scrap portion) Wp not to be used as the product of the workpiece W, but the laser processing unit 1 is not limited to this. For example, the preliminarily processing may be carried out, as a part of the product processing, on the portion (the product portion) Wm to be used as the product of the workpiece W.

In the embodiment described above, the control unit 54 is described as the one that controls the product processing by the laser processing unit 1 in accordance with the processing condition for the product processing in the product processing mode, and controls the preliminary processing by the laser processing unit 1 in accordance with the processing condition for the preliminary processing in the preliminary processing mode. However, the control unit 54 is not limited to this. For example, the control unit 54 may control the preliminary processing by the laser processing unit 1 in accordance with the processing condition for the product processing during the preliminary processing.

In the embodiment described above, the beam detection unit 40 is described as the one connected to the housing 20a of the laser processing head 20 via the optical fiber 42. However, the beam detection unit 40 is not limited to this. For example, the beam detection unit 40 can be provided on the transmission side of the beam splitter 22 inside the housing 20a of the laser processing head 20, or can be provided on a side surface of the laser processing head 20.

In the embodiment described above, the beam detection unit 40 is described as the one that includes the spectral function and the detection function of the light intensity distribution, in which the spectrometer is preferably used. However, the beam detection unit 40 is not limited to this. For example, the beam detection unit 40 may not include the spectral function. Various arbitrary configurations can be adopted to the beam detection unit 40, such as the one that includes a photodiode having the detection function of the light intensity distribution, and a diffraction grating that selects or a band-path filter that transmits a beam in a particular wavelength band effective to determine the processing possibility, which is provided so as to face the photodiode.

The above-described predetermined wavelength band in which the beam detection unit 40 detects the light intensity distribution is described as the one in which the wavelength band of 300 nm to 1000 nm is preferable. However, the predetermined wavelength band is not limited to this. For example, the predetermined wavelength band may only be a visible beam wavelength region, may be the one that includes an ultraviolet wavelength band of 300 nm or less, or may be the one that includes an infrared wavelength band of 1000 nm or more.

### Reference Signs List

1 laser processing unit
10 laser oscillator
1 laser processing unit
2, 3, 4 interfaces
10 laser oscillator
11 process fiber
20 laser processing head
20a housing
30 processing table
40 beam detection unit
41 cable
42 optical fiber
50 NC device
51 storage unit
52 display unit
53 data processing unit
54 control unit
55 input unit
56 learning unit
60 processing determination unit
62 learning unit
64 determination unit
70 assist gas supply device
100 laser processing machine
BR beam travelling from a side of a processing portion to a side of a beam splitter
BR' beam BR' on a transmission side that has passed through a beam splitter 22
L laser beam
SP processing portion
W workpiece
Wm portion to be used as a product (product portion)
Wp portion not to be used as the product (scrap portion)

## Claims

1. A laser processing machine (100), comprising:
a laser processing unit (1) configured to irradiate a workpiece (W) with a laser beam (L) to carry out laser processing on the workpiece (W);
a control unit (54) configured to control the laser processing unit (1) in accordance with a processing condition under which the workpiece (W) is processed;
a beam detection unit (40) configured to detect a beam (BR') from a processing portion (SP) of the workpiece (W) irradiated with the laser beam (L); and
a processing determination unit (60) connected to the beam detection unit (40), **characterized in that**
the control unit (54) is configured to control the laser processing unit (1) in a product processing mode for carrying out product processing of the workpiece (W) and in a preliminary processing mode for carrying out preliminary processing of the workpiece (W) prior to the product processing,
in which preliminary processing, the laser processing unit (1) irradiates under the control of the control unit (54) the workpiece (W) with a laser beam (L) of a power lower than a power used during the product processing,
wherein the beam detection unit (40) is capable of detecting a light intensity distribution of the beam (BR') in a predetermined wavelength band, and
wherein the processing determination unit (60) is configured to determine a processing possibility of the workpiece (W) based on the light intensity distribution detected by the beam detection unit (40) during the preliminary processing.

2. The laser processing machine (100) according to claim 1, wherein the processing determination unit (60) is configured to determine the processing possibility of the workpiece (W) based on time-series data of the light intensity distribution of the beam (BR') detected by the beam detection unit (40).

3. The laser processing machine (100) according to claim 2, wherein the processing determination unit (60) includes a learning unit (62) configured to learn a relation between the light intensity distribution detected by the beam detection unit (40) and the processing possibility of the workpiece (W).

4. The laser processing machine (100) according to claim 3, wherein the processing determination unit (60) is configured to cause the learning unit (62) to learn in advance the relation between the light intensity distribution detected by the beam detection unit (40) and the processing possibility of the workpiece (W), the learning unit (62) is configured to learn labeled time-series data of the light intensity distribution labeled with the processing possibility of the laser processing as learning data.

5. The laser processing machine (100) according to claim 3 or 4, wherein the processing determination unit (60) is configured to input the light intensity distribution detected by the beam detection unit (40) to the learning unit (62) so as to determine the processing possibility of the workpiece (W).

6. The laser processing machine (100) according to any one of claims 1 to 5, wherein, in use, the preliminary processing is marking and/or piercing.

7. The laser processing machine (100) according to any one of claims 1 to 6, wherein the laser processing unit (1) is configured to carry out the preliminary processing on a portion (Wp) of the workpiece (W), the portion (Wp) being not to be used as a product.

8. The laser processing machine according to any one of claims 1 to 7, wherein, in use, the beam (BR') detected by the beam detection unit (40) includes a beam emitted from the processing portion (SP) of the workpiece (W), and the processing determination unit (60) is configured to determine the processing possibility of the workpiece (W) based on the beam emitted from the processing portion (SP).

9. The laser processing machine (100) according to claim 8, wherein, in use, the beam emitted from the processing portion (SP) includes a beam of high-temperature luminescence due to heat radiation of the workpiece (W) heated by the laser beam (L), and a beam of plasma emission due to laser-induced plasma, and the processing determination unit (60) is configured to determine the processing possibility of the workpiece (W) based on the beam of the high-temperature luminescence due to the heat radiation of the workpiece (W) heated by the laser beam (L), and the beam of the plasma emission due to the laser-induced plasma.

## Patentansprüche

1. Eine Laserbearbeitungsmaschine (100), aufweisend:
eine Laserbearbeitungseinheit (1), die so konfiguriert ist, dass sie ein Werkstück (W) mit einem Laserstrahl (L) bestrahlt, um eine Laserbearbeitung an dem Werkstück (W) durchzuführen;
eine Steuereinheit (54), die so konfiguriert ist, dass sie die Laserbearbeitungseinheit (1) entsprechend einem Bearbeitungszustand steuert, in dem das Werkstück (W) bearbeitet wird;
eine Strahlerfassungseinheit (40), die so konfiguriert ist, dass sie einen Träger (BR') von einem Bearbeitungsabschnitt (SP) des Werkstücks (W) detektiert, der mit dem Laserstrahl (L) bestrahlt wird; und
eine mit der Strahlerfassungseinheit (40) verbundene Bearbeitungsbestimmungseinheit (60), **dadurch gekennzeichnet, dass**
die Steuereinheit (54) dazu ausgelegt ist, die Laserbearbeitungseinheit (1) in einem Produktbearbeitungsmodus zur Durchführung einer Produktbearbeitung des Werkstücks (W) und in einem Vorbearbeitungsmodus zur Durchführung einer Vorbearbeitung des Werkstücks (W) vor der Produktbearbeitung zu steuern,
wobei bei der Vorbearbeitung die Laserbearbeitungseinheit (1) unter der Steuerung der Steuereinheit (54) das Werkstück (W) mit einem Laserstrahl (L) einer Leistung bestrahlt, die geringer ist als eine während der Produktbearbeitung verwendete Leistung,
wobei die Strahlerfassungseinheit (40) eine Lichtintensitätsverteilung des Strahls (BR') in einem vorbestimmten Wellenlängenband erfassen kann, und
wobei die Bearbeitungsbestimmungseinheit (60) dazu konfiguriert ist, eine Bearbeitungsmöglichkeit des Werkstücks (W) auf der Grundlage der von der Strahlerfassungseinheit (40) während der Vorbearbeitung erfassten Lichtintensitätsverteilung zu bestimmen.

2. Die Laserbearbeitungsmaschine (100) nach Anspruch 1, wobei die Bearbeitungsbestimmungseinheit (60) so konfiguriert ist, dass sie die Bearbeitungsmöglichkeit des Werkstücks (W) auf der Grundlage von Zeitreihendaten der Lichtintensitätsverteilung des von der Strahlerfassungseinheit (40) erfassten Strahls (BR') bestimmt.

3. Die Laserbearbeitungsmaschine (100) nach Anspruch 2, wobei die Bearbeitungsbestimmungseinheit (60) eine Lerneinheit (62) aufweist, die so konfiguriert ist, dass sie eine Beziehung zwischen der von der Strahl-Erfassungseinheit (40) erfassten Lichtintensitätsverteilung und der Bearbeitungsmöglichkeit des Werkstücks (W) lernt.

4. Die Laserbearbeitungsmaschine (100) nach Anspruch 3, wobei die Bearbeitungsbestimmungseinheit (60) so konfiguriert ist, dass sie die Lerneinheit (62) veranlasst, im Voraus die Beziehung zwischen der von der Strahlerfassungseinheit (40) erfassten Lichtintensitätsverteilung und der Bearbeitungsmöglichkeit des Werkstücks (W) zu lernen, wobei die Lerneinheit (62) so konfiguriert ist, dass sie mit der Bearbeitungsmöglichkeit der Laserbearbeitung gekennzeichnete Zeitreihendaten der Lichtintensitätsverteilung als Lerndaten lernt.

5. Die Laserbearbeitungsmaschine (100) nach Anspruch 3 oder 4, wobei die Bearbeitungsbestimmungseinheit (60) so konfiguriert ist, dass sie die von der Strahlerfassungseinheit (40) erfasste Lichtintensitätsverteilung in die Lerneinheit (62) eingibt, um die Bearbeitungsmöglichkeit des Werkstücks (W) zu bestimmen.

6. Die Laserbearbeitungsmaschine (100) nach einem der Ansprüche 1 bis 5, wobei bei der Verwendung die Vorbearbeitung das Markieren und/oder das Durchstechen ist.

7. Die Laserbearbeitungsmaschine (100) nach einem der Ansprüche 1 bis 6, wobei die Laserbearbeitungseinheit (1) so konfiguriert ist, dass sie die Vorbearbeitung an einem Abschnitt (Wp) des Werkstücks (W) durchführt, wobei der Abschnitt (Wp) nicht als Produkt verwendet wird.

8. Die Laserbearbeitungsmaschine nach einem der Ansprüche 1 bis 7, wobei bei Verwendung der von der Strahlerfassungseinheit (40) erfasste Strahl (BR') einen Strahl aufweist, der von dem Bearbeitungsabschnitt (SP) des Werkstücks (W) emittiert wird, und die Bearbeitungs-Bestimmungseinheit (60) so konfiguriert ist, dass sie die Bearbeitungsmöglichkeit des Werkstücks (W) auf der Basis des von dem Bearbeitungsabschnitt (SP) emittierten Strahls bestimmt.

9. Die Laserbearbeitungsmaschine (100) nach Anspruch 8, wobei bei Verwendung
der von dem Bearbeitungsabschnitt (SP) emittierte Strahl einen Strahl mit Hochtemperaturlumineszenz aufgrund von Wärmestrahlung des durch den Laserstrahl (L) erwärmten Werkstücks (W) und einen Strahl einer Plasmaemission aufgrund eines laserinduzierten Plasmas, und
die Bearbeitungsbestimmungseinheit (60) so konfiguriert ist, dass sie die Bearbeitungsmöglichkeit des Werkstücks (W) auf der Basis des Strahls der Hochtemperaturlumineszenz aufgrund der Wärmestrahlung des durch den Laserstrahl (L) erhitzten Werkstücks (W) und des Strahls der Plasmaemission aufgrund des laserinduzierten Plasmas bestimmt.

## Revendications

1. Machine de traitement laser (100), comprenant :
une unité de traitement laser (1) configurée pour irradier une pièce (W) avec un faisceau laser (L) pour mettre en œuvre un traitement laser sur la pièce (W) ;
une unité de contrôle (54) configurée pour contrôler l'unité de traitement laser (1) conformément à une condition de traitement dans laquelle la pièce (W) est traitée ;
une unité de détection de faisceau (40) configurée pour détecter un faisceau (BR') provenant d'une portion de traitement (SP) de la pièce (W) irradiée par le faisceau laser (L) ; et
une unité de détermination de traitement (60) connectée à l'unité de détection de faisceau (40),
**caractérisée en ce que**
l'unité de contrôle (54) est configurée pour contrôler l'unité de traitement laser (1) dans un mode de traitement de produit pour mettre en œuvre le traitement de produit de la pièce (W) et dans un mode de traitement préliminaire pour mettre en œuvre le traitement préliminaire de la pièce (W) avant le traitement de produit,
où, pendant le traitement préliminaire, l'unité de traitement laser (1) irradie la pièce (W) sous le contrôle de l'unité de contrôle (54) avec un faisceau laser (L) d'une puissance inférieure à la puissance utilisée durant le traitement de produit,
dans laquelle l'unité de détection de faisceau (40) est capable de détecter une distribution d'intensité lumineuse du faisceau (BR') dans une bande de longueur d'onde prédéterminée, et
dans laquelle l'unité de détermination de traitement (60) est configurée pour déterminer une possibilité de traitement de la pièce (W) sur la base de la distribution d'intensité lumineuse détectée par l'unité de détection de faisceau (40) durant le traitement préliminaire.

2. Machine de traitement laser (100) selon la revendication 1, dans laquelle l'unité de détermination de traitement (60) est configurée pour déterminer la possibilité de traitement de la pièce (W) sur la base de données de séries temporelles de la distribution d'intensité lumineuse du faisceau (BR') détecté par l'unité de détection de faisceau (40).

3. Machine de traitement laser (100) selon la revendication 2, dans laquelle l'unité de détermination de traitement (60) inclut une unité d'apprentissage (62) configurée pour apprendre une relation entre la distribution d'intensité lumineuse détectée par l'unité de détection de faisceau (40) et la possibilité de traitement de la pièce (W).

4. Machine de traitement laser (100) selon la revendication 3, dans laquelle l'unité de détermination de traitement (60) est configurée pour commander à l'unité d'apprentissage (62) d'apprendre à l'avance la relation entre la distribution d'intensité lumineuse détectée par l'unité de détection de faisceau (40) et la possibilité de traitement de la pièce (W), et l'unité d'apprentissage (62) est configurée pour apprendre des données de séries temporelles étiquetées de la distribution d'intensité lumineuse étiquetée avec la possibilité de traitement du traitement laser en tant que données d'apprentissage.

5. Machine de traitement laser (100) selon la revendication 3 ou 4, dans laquelle l'unité de détermination de traitement (60) est configurée pour entrer la distribution d'intensité lumineuse détectée par l'unité de détection de faisceau (40) dans l'unité d'apprentissage (62) de manière à déterminer la possibilité de traitement de la pièce (W).

6. Machine de traitement laser (100) selon l'une quelconque des revendications 1 à 5, dans laquelle, lors de l'utilisation, le traitement préliminaire est un marquage et/ou un perçage.

7. Machine de traitement laser (100) selon l'une quelconque des revendications 1 à 6, dans laquelle l'unité de traitement laser (1) est configurée pour mettre en œuvre le traitement préliminaire sur une portion (Wp) de la pièce (W), la portion (Wp) n'étant pas destinée à être utilisée comme un produit.

8. Machine de traitement laser selon l'une quelconque des revendications 1 à 7, dans laquelle, lors de l'utilisation, le faisceau (BR') détecté par l'unité de détection de faisceau (40) inclut un faisceau émis par la portion de traitement (SP) de la pièce (W), et l'unité de détermination de traitement (60) est configurée pour déterminer la possibilité de traitement de la pièce (W) sur la base du faisceau émis par la portion de traitement (SP).

9. Machine de traitement laser (100) selon la revendication 8, dans laquelle, lors de l'utilisation,
le faisceau émis par la portion de traitement (SP) inclut un faisceau de luminescence à haute température dû au rayonnement thermique de la pièce (W) chauffée par le faisceau laser (L), et un faisceau d'émission de plasma dû à un plasma induit par laser, et
l'unité de détermination de traitement (60) est configurée pour déterminer la possibilité de traitement de la pièce (W) sur la base du faisceau de luminescence à haute température dû au rayonnement thermique de la pièce (W) chauffée par le faisceau laser (L), et du faisceau de l'émission de plasma dû au plasma induit par laser.
